# EUROPÄISCHE PATENTSCHRIFT

(11) **EP 3 549 850 B1**
(45) Veröffentlichungstag und Bekanntmachung des Hinweises auf die Patenterteilung: **25.08.2021**
(21) Anmeldenummer: 19171515.0
(22) Anmeldetag: 26.02.2014
(51) Int. Cl.: B62M 6/45

(54) **HALTEVORRICHTUNG AUFWEISEND EINEN CONTROLLER UND ENTSPRECHENDES VERFAHREN**
MOUNTING DEVICE COMPRISING A CONTROLLER AND CORRESPONDING METHOD
DISPOSITIF DE FIXATION COMPRENANT UN CONTROLLEUR ET PROCÉDÉ CORRESPONDANT

(43) Veröffentlichungstag der Anmeldung: 09.10.2019
(62) Teilanmeldung aus: 14708226.7
(73) Patentinhaber: Robert Bosch GmbH, 70442 Stuttgart (DE)
(72) Erfinder: Gahlert, Andreas, 61462 Königstein (DE)

(56) Entgegenhaltungen:
- WO-A1-2010/038198
- DE-A1-102012 004 176
- DE-A1-102012 211 719

## Beschreibung

Die Erfindung betrifft eine Haltevorrichtung für ein mobiles Eingabe- und Auswertegerät zur Montage an einem Lenker eines Elektrofahrrads sowie ein entsprechendes Verfahren.

Steuerungssysteme in Fahrzeugen werden mehr und mehr durch computergestützte Lösungen übernommen. Dabei werden vom Steuerungssystem vielfältige Informationen über Sensoren erfasst und ausgewertet und daraus entsprechende Steuersignale für elektronische Komponenten automatisch erzeugt. Darüber hinaus weisen derartige Steuerungssysteme üblicherweise eine Schnittstelle zum Benutzer auf, sodass dieser über Zustandsinformationen informiert wird und gegebenenfalls in die Steuerung eingreifen kann. Neben den für den Betrieb des Fahrzeuges wesentlichen Zustandsinformationen und Steuersignalen umfassen die Steuerungssysteme von Fahrzeugen in der Regel weitere Funktionalitäten, beispielsweise ein satellitengestütztes Navigationssystem oder einen Internetzugang.

Derartige Steuerungssysteme für Fahrzeuge dienen dabei sowohl als Bedieneinheit und Anzeigeinstrument als auch als zentraler Controller.

Bei hochpreisigen Fahrzeugen, wie beispielsweise höherwertigen Kraftfahrzeugen oder größeren Booten ist der Aufwand für die Implementation eines derartigen Steuerungssystems mit den damit verbundenen Kosten im Verhältnis zu den Gesamtkosten nicht wesentlich.

Allerdings besteht auch für günstigere Fahrzeuge, wie beispielsweise ein Fahrrad, ein Elektrofahrrad, ein Quad oder ein kleineres Motorboot, ebenfalls der Wunsch nach einem zentralen, vernetzten Steuerungssystem, in dem alle Informationen zusammenlaufen und dass anhand dieser Informationen Steuersignale aussenden kann und gleichzeitig eine Bedienerschnittstelle zur Verfügung stellt.

Von der Bosch GmbH wird in Zusammenarbeit mit einigen Herstellern von Elektrofahrrädern unter dem Markennamen "Nyon" ein Steuerungssystem angeboten, das fest mit dem jeweiligen Elektrofahrrad verbunden wird und neben der Antriebssteuerung auch weitere Funktionalitäten, wie eine satellitengestützte Navigation, eine Anbindung von Smartphones oder beispielsweise die Kopplung mit Herzfrequenzbrustgurten zur Anzeige der aktuellen Herzfrequenz bietet. Dieses herstellergebundene Steuerungssystem ist jedoch aufgrund der weitgehenden Integration in das jeweilige Elektrofahrrad wenig flexibel und erhöht den Herstellungsaufwand und damit die Kosten für das Elektrofahrrad deutlich.

Aus der WO 2020/038198 A1 ist ein Halter für einen Fahrradcomputer bekannt, bei dem der Fahrradcomputer mit einem Smartphone gekoppelt werden kann. Der Fahrradcomputer kann dabei auf Anforderung durch das Smartphone erfasst Sensorsignale des Fahrrads weiterleiten.

Aus der DE 10 2012 211 719 A1 ist ein Halter am Lenker eines Fahrrads bekannt, bei dem verschiedene Adapter eingesetzt werden können, die für unterschiedliche Smartphone-Typen verwendet werden können.

Die DE 10 2012 004 176 A1 beschreibt eine Möglichkeit, den Antrieb eines Elektrofahrrads bei einem Wechsel des Energiespeichers zu blockieren oder freizugeben. Zur Steuerung der Blockade oder der Freigabe kann ein Smartphone eingesetzt werden.

Mit der vorliegenden Erfindung soll eine Haltevorrichtung für ein Eingabe- und Auswertegerät beschrieben werden, welche die Kommunikation zwischen den Sensoren beziehungsweise elektronischen Komponenten am Fahrrad und dem Eingabe- und Auswertegerät steuert. Diese Aufgabe wird durch die Merkmale in den unabhängigen Ansprüche gelöst.

In der erfindungsgemäßen Haltevorrichtung ist mindestens ein Sende- und Empfangselement angeordnet, mit dem das mobile Eingabe- und Auswertegerät insbesondere drahtlos verbindbar ist. Die Haltevorrichtung dient damit sozusagen als Zentraleinheit mit eigenem Controller, der die zweigeteilte Kommunikation zwischen dem mobilen Eingabe- und Auswertegerät und den Mitteln beziehungsweise Komponenten steuert. Durch das Vorsehen einer drahtlosen Verbindung ist das Steuerungssystem dann im Wesentlichen herstellerunabhängig, da im Eingabe- und Auswertegerät keine entsprechenden Steckverbinder zur Verfügung gestellt werden müssen. Insbesondere bei der Verwendung eines Smartphones als mobiles Eingabe- und Auswertegerät sind die für eine drahtlose Kommunikation erforderlichen Funktionen, beispielsweise ein WLAN-Modul oder Bluetooth-Modul, in der Regel ohnehin bereits integriert. Dabei kann die Einbindung des mobilen Eingabe- und Auswertegerätes relativ problemlos erfolgen, da dieses nur mit dem in der Haltevorrichtung angeordneten Sende- und Empfangselement kommunizieren muss und keine eigenständige Verbindung zu den Mitteln beziehungsweise Komponenten des Fahrzeuges aufbaut. Der Implementierungsaufwand wird somit gering gehalten. Bei einem Steuerungssystem für ein Fahrzeug, das ein mobiles Eingabe- und Auswertegerät, eine Haltevorrichtung für das Eingabe- und Auswertegerät sowie Mittel zum Ansteuern elektronischer Komponenten und zum Erfassen von Zustandsinformationen des Fahrzeuges umfasst, ist vorgesehen, dass eine Auswertung der von den Mitteln erhaltenen Zustandsinformationen sowie die Generierung von Steuersignalen für die elektronischen Komponenten im mobilen Eingabe- und Auswertegerät erfolgt. Die Mittel umfassen dabei beispielsweise Sensoren, Schalter, Treiberbausteine, Kameras, Servomotoren und Ähnliches und ermöglichen zum Beispiel ein Auslesen von Fahrzeug- und/oder Fahrerdaten. Erfindungsgemäß wird dabei die im mobilen Eingabe- und Auswertegerät vorhandene Rechenleistung ausgenutzt und für die Steuerung fest mit dem Fahrzeug verbundener, elektronischer Komponenten verwendet. Das mobile Eingabe- und Auswertegerät dient somit als übergeordnete Steuerung, die mit unterschiedlichen Fahrzeugen eingesetzt werden kann. Insbesondere ist es als Zubehör für viele Fahrzeuge einsetzbar. Es ist also durch die Verwendung des erfindungsgemäßen Steuerungssystems nicht erforderlich, jedes Fahrzeug mit einem eigenen Steuerungssystem auszustatten, vielmehr kann der aufwendigste und damit kostenintensivste Teil, nämlich dass die erforderliche Rechen- und Speicherkapazität sowie eine Benutzerschnittstelle zur Verfügung stellende, mobile Eingabe- und Auswertegeräte mit unterschiedlichen Fahrzeugen verwendet werden. Dies hat darüber hinaus den Vorteil, dass nutzerspezifische Einstellungen durch Mitnahme des mobilen Eingabe- und Ausgabegerätes direkt im jeweils genutzten Fahrzeug verfügbar sind. Dabei ermöglicht die Verwendung des mobilen Eingabe- und Auswertegerätes zur Auswertung der Zustandsinformationen und zur Generierung von Steuersignalen den Einsatz des Steuerungssystems auch in kostengünstigen Fahrzeugen, da der Implementierungsaufwand gering gehalten wird. Insbesondere ist es nicht erforderlich, ein leistungsfähiges Steuergerät fest mit dem jeweiligen Fahrzeug zu verbinden. Deren Aufgabe wird vielmehr vom mobilen Eingabe- und Auswertegerät übernommen. Dabei können alle oder ausgewählte Zustandsinformationen vom mobilen Eingabe- und Auswertegerät angezeigt werden. Das mobile Eingabe- und Auswertegerät dient dabei also als sogenannter Bordcomputer oder Fahrradcomputer, der Informationen über die Ist-Geschwindigkeit des Fahrzeugs, der Fahrzeit, der durchschnittlichen Geschwindigkeit, des Energieverbrauchs, zurückgelegte Höhenmeter und ähnliches anzeigt. Auf zusätzliche Anzeigeelemente kann daher verzichtet werden.

Erfindungsgemäß ist das Fahrzeug als ein Elektrofahrrad ausgebildet, das ein elektrisches Antriebssystem umfasst, wobei Zustandsinformationen vom elektrischen Antriebssystem zum mobilen Eingabe- und Auswertegerät und Steuersignale vom mobilen Eingabe- und Auswertegerät an das Antriebssystem übertragbar sind. Insbesondere im Bereich der Elektrofahrzeuge, dabei besonders bei Elektrofahrrädern, ist der Preisdruck aufgrund konventionell angetriebener Fahrzeuge beziehungsweise mit Muskelkraft angetriebener Fahrräder sehr hoch. Darüber hinaus bieten derartige Elektrofahrzeuge gute Einflussmöglichkeiten für den Benutzer, wobei spezielle Zustandsinformationen, wie beispielsweise eine Restreichweite, eine Batteriekapazität oder ein anliegendes beziehungsweise verfügbares Drehmoment für den Nutzer besonders interessant sein können. Diese Zustandsinformationen können dem Nutzer dann über das Eingabe- und Auswertegerät zur Verfügung gestellt werden. Darüber hinaus kann das Eingabe- und Auswertegerät als übergeordnete Steuerung eine gegebenenfalls nutzerspezifische Steuerung des Antriebssystems übernehmen, wobei zumindest teilweise eine automatische Berücksichtigung der vom Fahrzeug stammenden Zustandsinformationen möglich ist. Durch das erfindungsgemäße Steuerungssystem ist es also möglich, ohne großen Aufwand und damit sehr kostengünstig, auch preisgünstige Fahrzeuge, wie Elektrofahrräder, mit einem komfortablen und hochfunktionellen Steuerungssystem auszustatten. Dabei kann eine Energieversorgung durch den Energiespeicher des Elektrofahrzeugs bzw. Elektrofahrades zumindest bedarfsbedingt vorgesehen werden, um
so eine Reichweitenbegrenzung aufgrund nicht ausreichender Batteriekapazität des mobilen Eingabe- und Auswertegerätes zu vermeiden.

Bevorzugterweise ist das mobile Eingabe- und Auswertegerät als Smartphone ausgebildet. Smartphones werden als Mobiltelefone von unterschiedlichen Herstellern angeboten, beispielsweise unter dem Markennamen "IPhone" von der Firma Apple oder unter dem Markennamen "Galaxy" von der Firma Samsung. Diese Smartphones weisen als berührungssensitives Display eine Benutzeroberfläche auf, die die Eingabe von Daten durch den Benutzer ermöglicht. Darüber hinaus können auf dem Display die Zustandsinformationen angezeigt werden. Smartphones bieten darüber hinaus eine Vielzahl von Funktionen wie Telefonie, Datenspeicherung wie insbesondere die Wiedergabe und Aufnahme von Bildern, Filmen und Musik, GPS-Navigation, mobile Internetnutzung, drahtlose Verbindungstechniken wie WLAN und Bluetooth und vieles mehr. Dabei sind die Smartphones in der Regel mit leistungsfähigen Prozessoren und ausreichend großen Speicherkapazitäten ausgestattet, sodass diese die zusätzlichen Steuerungsaufgaben eines Steuerungssystems problemlos und ausreichend schnell übernehmen können. Durch die Verwendung eines Smartphones, das ein großer Teil des angesprochenen Nutzerkreises sowieso schon besitzt, können also die zusätzlichen Kosten zum Ausstatten eines Fahrzeuges mit dem erfindungsgemäßen Steuerungssystem sehr gering gehalten werden. Der aufwendigste und damit kostenintensivste Teil des Steuerungssystems, nämlich die Recheneinheit mit dazu erforderlichen Speicherelementen und einer Anzeige und Bedienoberfläche wird dann durch das mobilen Gerät, nämlich dem Smartphone, zur Verfügung gestellt. In diesem Sinne gleichgestellt mit dem Smartphone sind dabei entsprechende elektronische Geräte, die keine Telefonierfunktion aufweisen, wie beispielsweise Tablet-PCs und Ähnliches.

Bevorzugterweise weist das Steuerungssystem Mittel zum Erfassen und insbesondere drahtlosem Übertragen biometrischer Daten des Fahrers an das mobile Eingabe- und Auswertegerät auf, das eine Funktion zur Darstellung und Auswertung der biometrischen Daten aufweist, wobei gegebenenfalls auf Grundlage der Auswertung automatisch Steuersignale vom mobilen Eingabe- und Auswertegerät generierbar sind. Nicht nur rein fahrzeugbezogene Zustandsinformationen werden also im Eingabe- und Auswertegerät verarbeitet und gegebenenfalls angezeigt, sondern auch nutzerspezifische Informationen. Beispielsweise kann ein zur Herzfrequenzmessung verwendeter Brustgurt drahtlos mit dem Eingabe- und Auswertegerät verbunden sein, sodass die aktuelle Herzfrequenz angezeigt wird. Wenn nun beispielsweise die so ermittelte Herzfrequenz über einen einstellbaren Grenzwert liegt, kann das mobile Eingabe- und Auswertegerät beispielsweise eine Unterstützung der Fortbewegung bei einem Elektrofahrrad durch entsprechende Ansteuerung des Antriebssystems verstärken, sodass der Nutzer entlastet wird. Aber auch andere Anwendungen, beispielsweise eine Blutdrucküberwachung, eine Müdigkeitserkennung und Ähnliches sind denkbar.

Vorzugsweise ist das Sende- und Empfangselement drahtlos mit den Mitteln verbindbar, wobei das Sende- und Empfangselement zur drahtlosen Kommunikation insbesondere mit standardisierten Verfahren geeignet ist. Das Sende- und Empfangselement, das die Kommunikation zwischen den Mitteln und dem mobilen Eingabe- und Auswertegerät leitet, kann also nicht nur mit dem mobilen Eingabe- und Auswertegerät drahtlos kommunizieren, sondern auch mit den Mitteln des Fahrzeuges. Ein Verdrahtungsaufwand wird damit sehr gering gehalten. Damit ist die Platzierung des Sende- und Empfangselementes am Fahrzeug auch nur geringen Einschränkungen unterworfen, da keine aufwendige Verlegung von Leitungen erforderlich ist. Der Implementationsaufwand des Steuerungssystems wird dementsprechend gering gehalten. Als standardisierte Verfahren kommen insbesondere WLAN, Bluetooth, 3&4, Zigbee und ähnliche Industriestandards zur drahtlosen Übertragung infrage, wobei es insbesondere voreilhaft ist, wenn alle Standards zur drahtlosen Kommunikation unterstützt werden, um eine maximale Kompatibilität und Zukunftssicherheit zu bieten.

Vorzugsweise weist das Steuerungssystem Mittel zur satellitengestützten Positionsbestimmung auf, die insbesondere in der Haltevorrichtung angeordnet sind. Diese Mittel können insbesondere dem Sende- und Empfangselement zugeordnet sein. Die satellitengestützte Positionsbestimmung kann dann beispielsweise in Verbindung mit Kartendaten zur satellitengestützten Navigation verwendet werden.

Besonders bevorzugt ist allerdings, dass in der Haltevorrichtung eine Diebstahlwarneinrichtung angeordnet ist, die insbesondere ein Positionstracking aufweist. Dabei wird die satellitengestützte Positionsbestimmung ausgenutzt und beispielsweise bei einer unbeabsichtigten Änderung der Position über ein in der Haltevorrichtung untergebrachtes GSM-Modul eine entsprechende Nachricht an das mobile Eingabe- und Auswertegerät übersandt, falls dieses nicht mit der Haltevorrichtung gekoppelt ist. Die Diebstahlwarneinrichtung kann auch noch weitere Elemente umfassen, beispielsweise einen Beschleunigungssensor und/oder einen akustischen Alarm.

Vorzugsweise weist das mobile Eingabe- und Auswertegerät eine Kartendarstellung auf, wobei insbesondere eine satellitengestützte Navigation umfasst ist. Damit bietet das mobile Eingabe- und Auswertegerät neben den für die Steuerung des Antriebssystems des Fahrzeuges erforderlichen Fähigkeiten auch alle Funktionen für eine automatische, satellitengestützte Navigation. Dies ist insbesondere bei den üblichen Smartphones problemlos möglich, da sowohl die Speicherkapazität als auch die Rechenkapazität ausreichend hoch ist und üblicherweise beispielsweise ein GPS-Modul und eine drahtlose Kommunikationstechnik bereits integriert sind. Dadurch wird die Anzahl erforderlicher Geräte zur Bereitstellung aller Funktionalitäten gering gehalten.

Bevorzugterweise umfassen die elektronischen Komponenten eine Komponente zur Motorsteuerung, eine elektronische Schaltungseinrichtung, ein Aktuator zur Beeinflussung einer Federrate bzw. von Fahrwerkseigenschaften, einen Aktuator zur Änderung einer Sattelhöhe und/oder eine Lichtsteuerung. Damit ist bei landgebundenen Fahrzeugen bereits eine weitgehende Beeinflussung der Fahreigenschaften möglich. Beispielsweise wird über zwei Servomotoren das Fahrwerk eingestellt, wobei eine Ansteuereung prinzipiell automatisch durch das Eingabe- und Auswertegerät erfolgen kann, das beispielsweise auf Grundlage von Kartendaten oder Messwerten weiß, ob es z.B. bergauf oder bergab geht oder welche Fahrbahnbeschaffenheit vorliegt. Bei Wasserfahrzeugen kann gegebenenfalls noch eine Möglichkeit der automatischen Steuerung, also ein Autopilot, hinzukommen. Dafür ist eine elektronische Komponente erforderlich, die die Fahrrichtung beeinflussen kann, beispielsweise ein Aktuator zur Verstellung eines
Ruderwinkels. Das Steuerungssystem kann aber je nach Anforderung auch noch weitere, hier nicht aufgeführte elektronische Komponenten aufweisen.

Die Mittel umfassen vorzugsweise einen Drehzahlensensor, einen Geschwindigkeitssensor, ein Trittfrequenzsensor, einen Druckluftsensor, einen Sensor zur Erfassung einer Ladekapazität und/oder einen Sensor zur Erfassung einer Ausgangsleistung. Damit sind bereits vielfältige Zustandsinformationen abrufbar, sodass eine weitgehend automatische Steuerung möglich ist. Auch können dem Nutzer viele Informationen bereitgestellt werden. Je nach Anforderungen können auch noch weitere Mittel vorgesehen sein, beispielsweise ein Höhensensor oder ein Temperatursensor. Weitere Mittel können in Form von Treiberbausteinen zur Ansteuerung der elektrischen Komponenten dienen. Wenn die Mittel zunächst mit dem Sende- und Empfangselement kommunizieren und die Signale von dort erst zum mobilen Eingabe- und Auswertegerät weitergeleitet werden, stellt die Anbindung vieler Mittel für das Eingabe- und Auswertegerät keine besondere Belastung dar. Vielmehr erfolgt die Adressierung dieser Mittel und gegebenenfalls auch der elektronischen Komponenten, vorzugsweise nur im Sende- und Empfangselement, sodass die Implementierung im Eingabe- und Auswertegerät rein softwarebezogen vorgenommen werden kann. Der Implementierungsaufwand wird so gering gehalten und die Variabilität hinsichtlich des verwendbaren Eingabe- und Auswertegerätes hoch gehalten. Beispielsweise können dafür Smartphones mit jedem beliebigen Betriebssystem verwendet werden.

In einer bevorzugten Weiterbildung ist ein elektrischer Energiespeicher, insbesondere zur Energieversorgung des in der Haltevorrichtung gehaltenen mobilen Eingabe- und Auswertegerätes in der Haltevorrichtung angeordnet. Dabei kann der elektrische Energiespeicher auch zur Energieversorgung des Sende- und Empfangselementes dienen, sodass die Haltevorrichtung frei platziert werden kann, ohne über Leitungen mit irgendwelchen Komponenten des Fahrzeuges verbunden werden zu müssen. Die Haltevorrichtung kann dabei problemlos auch auf bewegten Elementen, wie beispielsweise einem Lenker, montiert werden. Somit ist es problemlos möglich, das mobile Eingabe- und Auswertegerät in der Haltevorrichtung im gut zugänglichen und sichtbaren Bereich unterzubringen. Der elektrische Energiespeicher kann darüber hinaus zur Energieversorgung des mobilen Eingabe- und Auswertegerätes verwendet werden. Damit wird dem häufig vorhandenen Nachteil begegnet, dass die Kapazitäten der in mobilen Eingabe- und Auswertegeräten, insbesondere in Smartphones, verwendeten Akkus, sehr begrenzt sind. Mithilfe des elektrischen Energiespeichers innerhalb der
Haltevorrichtung können dennoch akzeptable Laufzeiten erreicht werden. Beispielsweise kann so der Betrieb über acht Stunden aufrechterhalten werden.

Vorzugsweise weist das mobile Eingabe- und Auswertegerät eine Funktion zur Restweitenberechnung auf. Dies ist insbesondere bei Fahrzeugen mit einem elektrischen Antrieb, wie Elektrofahrrädern, besonders hilfreich, da ein Nachladen des elektrischen Energiespeichers, der zur Versorgung des elektrischen Antriebs dient, nicht überall problemlos möglich ist und darüber hinaus relativ viel Zeit benötigt. Dabei können beispielsweise auch besondere Funktionen vorgesehen sein, um die Restreichweite zu verlängern, wie beispielsweise einer Begrenzung der maximal abrufbaren Leistung. Ferner kann vorgesehen sein, zur Restweitenberechnung auf hinterlegte Kartendaten, insbesondere eine Topografie der vorausliegenden Strecke, zurück zu greifen, umso eine sehr genaue Restweitenberechnung zu erzielen.

Vorteilhafterweise weist das Steuerungssystem ein Fernbedienungsmodul auf, das insbesondere drahtlos mit dem mobilen Eingabe- und Auswertegerät verbindbar ist. Über ein derartiges Fernbedienungsmodul kann dann das mobile Eingabe- und Auswertegerät bedient werden, ohne angefasst zu werden. Das Fernbedienungsmodul entspricht damit in etwa einer Multifunktionssteuerung, wie sie beispielsweise von entsprechenden Lenkrädern von Kraftfahrzeugen bekannt ist. Dabei ist es beispielsweise möglich, das Fernbedienungsmodul mit taktilen Tastern zu versehen, um auch mit Handschuhen eine Bedienung zu ermöglichen. Dies ist insbesondere bei der Verwendung eines Smartphones als Eingabe- und Auswertegerät vorteilhaft, das üblicherweise mit einem berührungssensitiven Display ausgestattet ist, welches eine Bedienung mit Handschuhen nicht erlaubt. Ferner kann das Fernbedienungsmodul so montiert werden, dass zu der Bedienung ein Lenker des Fahrzeuges, insbesondere des Elektrofahrrades, nicht losgelassen werden muss. Dies ist insbesondere dann möglich, wenn das Fernbedienungsmodul mit dem Daumen bedienbar ist und neben dem üblicherweise an einem Fahrradlenker vorhandenen Lenkergriffen montiert werden kann.

Bei einem Verfahren zur Steuerung eines Fahrzeuges, bei welchem es sich im Rahmen der Erfindung um ein Elektrofahrrad handelt, ist vorgesehen, Zustandsinformationen über am Fahrzeug befestigte Mittel zu erfassen und an ein mobiles Eingabe- und Auswertegerät zu übertragen, wobei im mobilen Eingabe- und Auswertegerät die Zustandsinformationen ausgewertet und Steuersignale zur Steuerung von elektronischen Komponenten des Fahrzeuges generiert werden. Zur Auswertung der Zustandsinformationen sowie der Generierung der Steuersignale dient also keine fest mit dem Fahrzeug verbundene Steuereinheit, sondern ein mobiles Eingabe- und Auswertegerät, das darüber hinaus noch weitere Funktionalitäten aufweisen kann. Insbesondere kann das mobile Eingabe- und Auswertegerät dabei zur Steuerung unterschiedlicher Fahrzeuge eingesetzt werden, wobei es vom Benutzer mit dem jeweils verwendeten Fahrzeug gekoppelt wird. Es ist also nicht erforderlich, für jedes Fahrzeug ein eigenes, stationäres und vollständiges Steuerungssystem zu integrieren. Vielmehr wird eine dezentrale Lösung angestrebt. Der Herstellungsaufwand des Fahrzeuges wird somit gering gehalten und durch die Verwendung eines meist ohnehin vorhandenen mobilen Eingabe- und Auswertegerätes eine kostengünstige Lösung zum Steuern der elektronischen Komponenten des Fahrzeuges bereitgestellt.

Dabei ist besonders bevorzugt, dass als mobiles Eingabe- und Auswertegerät ein Smartphone verwendet wird. Ein Smartphone ist häufig ohnehin vorhanden und für den mobilen Einsatz gerade prädestiniert. Dabei weist es in der Regel eine ausreichende Rechenleistung und Speicherkapazität auf, um weitere Programme auszuführen, die für die Steuerung der elektronischen Komponenten des Fahrzeuges erforderlich sind. Durch die Verwendung des Smartphones mit der dadurch zur Verfügung gestellten Rechenleistung und der dadurch ebenfalls zur Verfügung gestellten Benutzerschnittstelle, wie einem berührungsempfindlichen Display, wird der Aufwand und damit die Kosten für das restliche Steuerungssystem gering gehalten.

Dabei ist besonders bevorzugt, dass vom mobilen Eingabe- und Auswertegerät Steuersignale für ein elektrisches Antriebssystem des Fahrzeuges generiert werden, wobei Zustandsinformationen vom elektrischen Antriebssystem an das mobile Eingabe- und Auswertegerät übermittelt werden. Das mobile Eingabe- und Auswertegerät wird also nicht nur zur Anzeige von Zustandsinformationen, die über verschiedene Sensoren erfasst werden, verwendet, sondern auch zur Generierung von Steuersignalen für das elektrische Antriebssystem des Fahrzeuges. Weitere Steuersignale können beispielsweise für Stellmotoren, Schalter, Kameras, Sensoren und Ähnlichem generiert werden. Ein zusätzlicher, fest mit dem Fahrzeug verbundener Controller, kann daher gegebenenfalls vollständig entfallen oder aber mit geringerer Leistungsfähigkeit ausgestattet sein, sodass dieser entsprechend kostengünstiger ist.

In einer bevorzugten Ausgestaltung werden die Signale vom mobilen Eingabe- und Auswertegerät drahtlos an ein Sende- und Empfangselement übertragen, das in einer Haltevorrichtung für das mobile Eingabe- und Auswertegerät angeordnet ist, wobei die Signale vom Sende- und Empfangselement insbesondere drahtlos an die Mittel weitergeleitet werden. Durch die Verwendung standardisierter Protokolle für die drahtlose Übertragung können eine Vielzahl von mobilen Eingabe- und Auswertegeräten herstellerunabhängig mit dem Sende- und Empfangselement kommunizieren, ohne dass eine entsprechende drahtgebundene Schnittstelle geschaffen werden muss, die in der Regel gerätespezifisch sein müsste. Dadurch wird eine hohe Variabilität erhalten. Das Sende- und Empfangselement wandelt die vom Eingabe- und Auswertegerät generierten Signale dann in entsprechende, von den Mitteln verwendbare Signale um. Dasselbe gilt sinngemäß für die von den Mitteln empfangenen Informationen, die in entsprechende Signale für das Eingabe- und Auswertegerät umgesetzt werden. Die Adressierung der Mittel erfolgt dementsprechend im Sende- und Empfangselement, sodass die Implementation des mobilen Eingabe- und Auswertegerätes einfach gehalten ist. Eine drahtlose Übertragung der Signale zwischen Sende- und Empfangselement ermöglicht ein einfaches Entfernen oder Hinzufügen weiterer Mittel und Funktionalitäten. Ferner kann auf das aufwendige Verlegen von Leitungen verzichtet werden und das Sende- und Empfangselement, beziehungsweise die Haltevorrichtung für das Eingabe- und Auswertegerät, entsprechend frei positioniert werden.

Bevorzugterweise wird zumindest für den größten Teil der für die Steuerung des Fahrzeuges, insbesondere des elektrischen Antriebssystems, erforderlichen Rechenleistung die im Eingabe- und Auswertegerät verfügbare Rechenleistung genutzt. Eine entsprechende Rechenleistung steht insbesondere bei den üblichen Smartphones ohnehin zur Verfügung. Damit kann das übrige Steuerungssystem sehr einfach und kostengünstig aufgebaut werden.

Vorzugsweise wird zur Realisierung der Funktionen im mobilen Eingabe- und Auswertegerät Opensource-Software verwendet. Damit können die Funktionalitäten des Steuerungssystems relativ einfach erweitert und an sich ändernde Bedürfnisse angepasst werden. Darüber hinaus werden die Kosten für das Steuerungssystem dadurch gering gehalten.

Vorteilhafterweise werden im Eingabe- und Auswertegerät auf Basis der von den Mitteln erhaltenen Zustandsinformationen automatisch Steuersignale generiert, die insbesondere eine Federrate, eine Ansprechcharakteristik des elektrischen Antriebssystems und/oder eine Leistungsabgabe des elektrischen Antriebs steuern. Das mobile Eingabe- und Auswertegerät kann also auf die Fahreigenschaften des Fahrzeuges relativ stark Einfluss nehmen. Durch eine automatische Generierung der Steuersignale wird dabei ein hoher Komfort erreicht. Die Steuerung kann dabei so weit gehen, dass die generierten Daten für unterschiedliche Assistenzzwecke oder auch zur Gamifikation, also beispielsweise zum Datenaustausch zwischen "befreundeten" Systemen, verwendet werden können.

Die Erfindung wird im Folgenden anhand bevorzugter Ausführungsbeispiele in Verbindung mit den Zeichnungen näher beschrieben. Hierin zeigen:
Fig. 1 einen schematischen Aufbau einer ersten Ausführungsform des Steuerungssystems,
Fig. 2 einen schematischen Aufbau einer zweiten Ausführungsform des Steuerungssystems und
Fig. 3 einen schematischen Aufbau einer dritten Ausführungsform des Steuerungssystems.

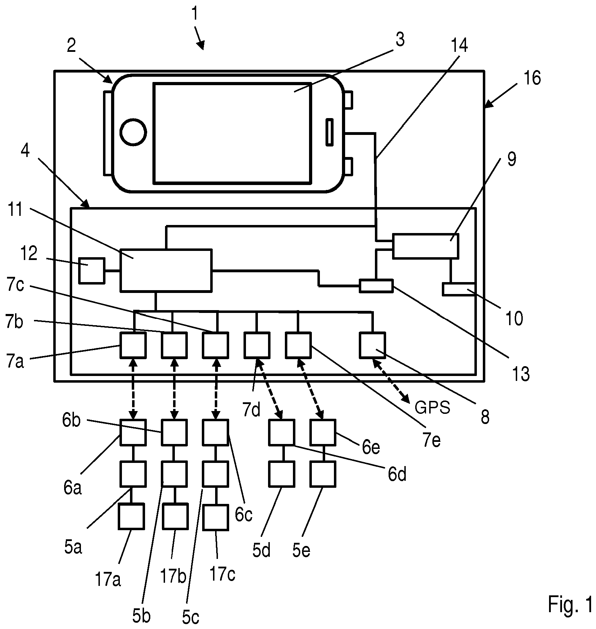

In Figur 1 ist schematisch ein Steuerungssystem 1 für ein Elektrofahrrad dargestellt. Das Steuerungssystem 1 umfasst als wesentliche Komponente ein mobiles Eingabe- und Auswertegerät 2, dass die für den Betrieb des Steuerungssystems 1 erforderliche Rechenleistung und zusätzlich eine Bedienerschnittstelle zur Verfügung stellt. Das Eingabe- und Auswertegerät 2 ist als Smartphone ausgebildet, beispielsweise als IPhone oder Samsung Galaxy und weist dementsprechend ein berührungssensitives Display zur Anzeige von Informationen sowie als Nutzerschnittstelle auf, über das Eingaben vom Benutzer vorgenommen werden können. Ein Sende- und Empfangselement 4 dient zur Übertragung von Signalinformationen zwischen dem Eingabe- und Auswertegerät 2 und Mitteln 5a bis 5e, die Kommunikationsmitteln 6a bis 6e umfassen, um drahtlos mit dem Sende- und Empfangselement 4 kommunizieren zu können. Mit Hilfe der Mittel 5a-5c können elektronische Komponenten 17-17c wie beispielsweise Schalter, ein elektrisches Antriebssystem, Stellmotoren, eine Kamera und Ähnliches angesteuert werden. Die Mittel 5a-5c mit den dazugehörigen Kommunikationsmitteln 6a-6c ermöglichen dann die Kommunikation über einen drahtlosen Standard, beispielsweise Zigbee, Bluetooth, WLAN oder Ähnliches. Das Sende- und Empfangselement 4 weist dementsprechende Kommunikationselemente 7a bis 7e auf.

Auch wenn im hier gezeigten, schematischen Aufbau die Anzahl der Kommunikationselemente 7a bis 7e mit der Anzahl der Mittel 5a bis 5e übereinstimmt, ist dies an sich nicht erforderlich. Vielmehr kann ein einziges Kommunikationselement mit mehreren Mitteln verbunden sein. Die hohe Anzahl an Kommunikationselementen 7a bis 7e dient nur der Veranschaulichung verschiedener, anwendbarer Funkstandards, die nicht alle im Sende- und Empfangselement 4 integriert sein müssen.

Das Sende- und Empfangselement 4 ist in der erfindungsgemäßen Haltevorrichtung 16 untergebracht, die eine formschlüssige Aufnahme des mobilen Eingabe- und Auswertegerätes aufweist. Bei Betrieb des Fahrzeuges kann das mobile Eingabe- und Auswertegerät dementsprechend sicher in der Haltevorrichtung gehalten werden.

Ferner umfasst das Sende- und Empfangselement 4 ein Mittel 8 zur satellitengestützten Positionsbestimmung, insbesondere eines GPS-/GSM-Modul. Ferner ist ein elektrischer Energiespeicher 9, der beispielsweise als Batterie ausgebildet ist, eine Kamera 10, ein Controller 11 sowie eine Steuerungskomponente 12 vorgesehen. Gegebenenfalls kann über einen Schalter 13 eine Energieversorgung zwischen dem elektrischen Energiespeicher 9 und dem Controller 11 ein- und ausgeschaltet werden. Dementsprechend kann das Steuerungssystem 1 in Betrieb genommen werden beziehungsweise bei Nichtgebrauch ausgestellt werden.

Zwischen dem Sende- und Empfangselement 4 und dem mobilen Eingabe- und Auswertegerät 2 ist bei diesem Ausführungsbeispiel eine drahtgebundene Kommunikation vorgesehen. Dafür ist eine Leitung 14 mit entsprechenden Anschlusssteckern in eine Anschlussbuchse des Eingabe- und Auswertegerätes 2 eingeführt. Über die Leitung 14 erfolgt dann zum einen eine elektrische Energieversorgung aus dem elektrischen Energiespeicher 9 und ferner eine Übertragung von Steuersignalen und Zustandsinformationen zwischen dem Eingabe- und Auswertegerät 2 und dem Sende- und Empfangselement 4 beziehungsweise dem Controller 11. Der Controller 11 setzt dann die empfangenen Steuersignale in entsprechende Signale für die Mittel 5a bis 5c um, die dann als Treiberstufe dienen. Im Gegenzug wandelt er die von den Mitteln 5d und 5e empfangenen Signale in entsprechende, vom Eingabe- und Auswertegerät 2 verwertbare Daten um. Das Sende- und Empfangselement 4, das in der Haltervorrichtung für das mobile Eingabe- und Auswertegerät 2 integriert ist, stellt also eine Zentraleinheit dar, die zur Kommunikation zwischen dem mobilen Eingabe- und Auswertegerät 2 und den Mitteln 5a bis 5e beziehungsweise den Komponenten 17a bis 17c des Fahrzeuges dient. Dabei wird für die wesentlichen Steuerungsaufgaben, insbesondere die Generierung der Steuersignale die Rechenleistung des mobilen Eingabe- und Auswertegerätes 2 verwendet.

Bei dem in Figur 1 dargestellten Ausführungsbeispiel erfolgt die Kommunikation zwischen dem mobilen Eingabe- und Auswertegerät 2 sowie dem Sende- und Empfangselement 4 drahtgebunden, was durch eine durchgezogene Leitung dargestellt ist. Die Kommunikation zwischen dem Sende- und Empfangselement 4 und den Mitteln 6a bis 6e erfolgt hingegen drahtlos über entsprechende Standards, beispielsweise Bluetooth, WLAN oder Ähnlichem. Es ist daher problemlos möglich, das Steuerungssystem 1 um weitere Komponenten zu erweitern oder einzelne Komponenten zu entfernen. Auch ist eine räumliche Trennung zwischen dem Sende- und Empfangselement sowie den einzelnen Komponenten 5a bis 5e problemlos durch die drahtlose Kommunikation überbrückbar. Ein Implementierungs- und Nachrüstungsaufwand wird so gering gehalten.

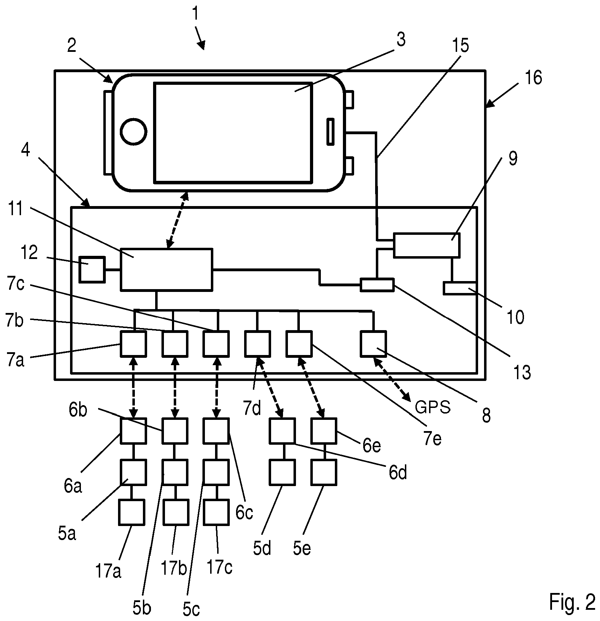

Figur 2 zeigt nun schematisch den Aufbau eines weiteren Ausführungsbeispiels des Steuerungssystems 1, der sich im Wesentlichen dadurch von dem in Figur 1 dargestellten Aufbau unterscheidet, dass das mobile Eingabe- und Auswertegerät 2 drahtlos mit dem Sende- und Empfangselement 4 kommuniziert. Zusätzlich ist eine drahtgebundene Energieversorgung über eine Versorgungsleitung 15 vorgesehen. Die drahtlose Kommunikation zwischen dem Sende- und Empfangselement 4 sowie dem Eingabe- und Auswertegerät 2 erfolgt dann vorzugsweise ebenfalls über übliche Industriestandards, beispielsweise WLAN oder Bluetooth. Dadurch ist eine Kommunikation bzw. Steuerung bereits dann möglich, wenn das mobile Eingabe- und Auswertegerät 2 noch nicht in der Haltevorrichtung 16 aufgenommen ist. Darüber hinaus ist eine herstellerunabhängige Verwendung von Eingabe- und Auswertegeräten 2 möglich, da diese nur eine standardisierte, drahtlose Übertragung anbieten müssen, wobei jedoch auf spezielle Anschlussstecker beziehungsweise Anschlussbuchsen keine Rücksicht genommen werden muss.

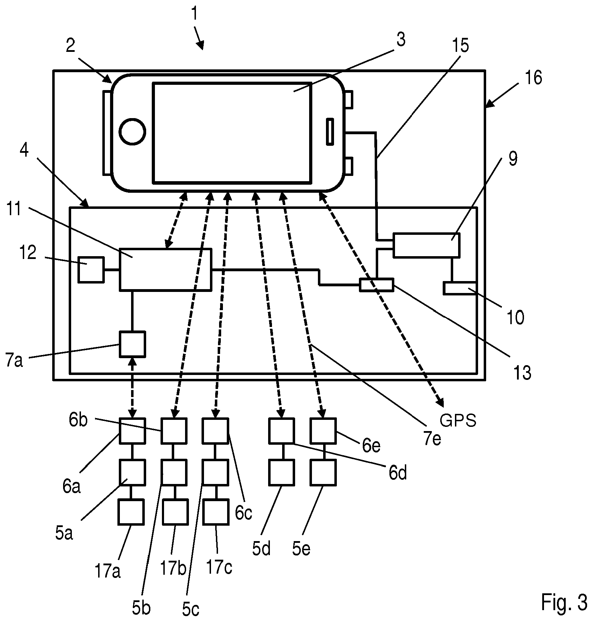

In Figur 3 ist ein weiter vereinfachter Aufbau eines Steuerungssystems 1 dargestellt, bei dem das mobile Eingabe- und Auswertegerät 2 teilweise direkt und drahtlos mit den Mitteln 5b bis 5d und den entsprechenden Komponenten 17b und 17c kommuniziert. Zusätzlich erfolgt eine drahtlose Kommunikation zwischen dem Eingabe- und Auswertegerät 2 und dem Sende- und Empfangselement 4 und von dort wiederum mit dem Mittel 6a und der Komponente 5a. Das Sende- und Empfangselement 4 weist darüber hinaus kein Mittel zur satellitengestützten Positionsbestimmung auf. Vielmehr wird das im Eingabe- und Auswertegeräten 2 vorhandene GPS-Modul zu Positionsbestimmung verwendet. Insbesondere bei üblichen Smartphones ist dieses ohnehin vorhanden.

Die Erfindung ist nicht auf eines der vorbeschriebenen Ausführungsbeispiele beschränkt. Vielmehr ist sie in vielfältiger Weise abwandelbar. So können unterschiedliche Standards zur drahtlosen Kommunikation vorgesehen sein. Es ist auch denkbar, das Sende- und Empfangselement 4 drahtgebunden mit den Mitteln 6a bis 6e beziehungsweise den Komponenten 17a bis 17c zu verbinden. Auch ist die Anzahl der Mittel und Komponenten in Abhängigkeit von den jeweiligen Anforderungen relativ frei wählbar.

Das Steuerungssystem für ein Elektrofahrrad, bietet eine preiswerte, mit geringem Aufwand realisierbare Lösung. Dabei werden meist ohnehin vorhandene mobile Eingabe- und Auswertegeräte, wie Smartphones oder Tablet-PCs, als wesentliche Komponente genutzt, die vor allem die für die Steuerung erforderliche Rechenleistung bereitstellen. Der fest mit dem jeweils verwendeten Fahrzeug zu verbindende Teil des Steuerungssystems, also insbesondere das Sende- und Empfangselement sowie die Mittel und elektronischen Komponenten sind teilweise ohnehin vorhanden, teilweise aber auch ohne großen Aufwand zu installieren. Dabei erfolgt über das mobile Eingabe- und Auswertegerät, insbesondere einem Smartphone, eine preiswerte Vernetzungslösung aller elektronischen Komponenten mit neuartigen Anzeige- und Bedienkonzepten. Insbesondere können Zustandsinformationen sowohl vom Fahrer als auch vom Fahrzeug und der Umwelt vom mobilen Eingabe- und Auswertegerät erfasst und ausgewertet werden.

Das mobile Eingabe- und Auswertegerät integriert dabei viele Funktionen in sich, beispielsweise bei einem Elektrofahrrad die Funktionen eines Fahrradcomputers, eines Telefons, eines Musikspielers, eine Lichtsteuerung, eine Betätigung für eine Gangschaltung, eine Einstellung einer Federcharakteristik, eine Einstellung einer Sattelhöhe und Weiteres. Durch zusätzliche Software ergibt sich dabei eine einfache Erweiterbarkeit.

Das Steuerungssystem stellt also eine drahtlose, vernetzte Steuerung von Fahrzeugsystemen auf Basis von mobilen Eingabe- und Auswertegeräten, wie Smartphones, dar. Dabei kann das Steuerungssystem durch die Verlagerung des teuersten Elementes eines derartigen Steuerungssystems, nämlich des die Rechenleistung bereitstellenden Computers, in ein ohnehin vorhandenes Gerät, wie ein Smartphone, eine sehr kostengünstige, wenig aufwendige Herstellung erreichen. Dabei werden sowohl Fahrzeug- als auch Fahrerdaten über entsprechende Mittel, wie Sensoren, erfasst und zur automatischen und intelligenten Steuerung mittels Software im mobilen Eingabe- und Auswertegerät ausgewertet. Zusätzlich kann ein satellitengestützter Diebstahlschutz vorgesehen werden sowie eine zusätzliche Energieversorgung, um die Laufdauer des mobilen Eingabe- und Auswertegerätes zu vergrößern. Darüber hinaus kann über das mobile Eingabe- und Auswertegerät optional auch eine Steuerung des elektrischen Antriebssystems erfolgen. Die fest mit dem jeweiligen Fahrzeug zu installierenden Elemente der Steuerung können also relativ kostengünstig gefertigt werden. Insbesondere kann es dabei möglich sein, einzelne Komponenten, wie Motoren, Sensoren, Schalter, Kameras und Antriebe zu steuern.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- 1: Steuerungssystem
- 2: Eingabe- und Auswertegerät
- 3: Display
- 4: Sende- und Empfangselement
- 5a-5e: Mittel
- 6a-6e: Kommunikationsmittel
- 7a-7e: Kommunikationselemente
- 8: Mittel zur satellitengestützten Kommunikation
- 9: elektrischer Energiespeicher
- 10: Kamera
- 11: Controller
- 12: Steuerungskomponente
- 13: Schalter
- 14: Leitung
- 15: Versorgungsleitung
- 16: Haltevorrichtung
- 17a-17c: elektronische Komponenten

## Patentansprüche

1. Haltevorrichtung (16) für ein mobiles Eingabe- und Auswertegerät (2) zur Montage an einem Lenker eines Elektrofahrrads, mit einer formschlüssigen Aufnahme für das mobile Eingabe- und Auswertegerät (2) wobei das Eingabe- und Auswertegerät (2) zur Steuerung von mit dem Elektrofahrrad verbundener elektronische Komponenten (17a-17c) vorgesehen ist, insbesondere zur Steuerung des Antriebssystems des Elektrofahrrads,
wobei in der Haltevorrichtung (16) ein Sende- und Empfangselement (4) angeordnet ist, mit dem das mobile Eingabe- und Auswertegerät (2) insbesondere drahtlos verbindbar ist,
wobei das Sende- und Empfangselement (4)
• Kommunikationselemente (7a-7e) aufweist, über die eine insbesondere drahtlose Verbindung mit Mitteln (5a-5e)
• zum Erfassen von Zustandsinformationen des Elektrofahrrads, und
• zum Ansteuern der elektronischen Komponenten (17a-17c) durch in dem Eingabe- und Auswertegerät (2) erzeugten Steuersignale herstellbar ist, und
• einen Controller (11) aufweist, der dazu eingerichtet ist, die Kommunikation zwischen dem mobilen Eingabe- und Auswertegerät (2) und den Mitteln (5a-5e) zu steuern,
wobei der Controller eingerichtet ist,
• die erfassten Zustandsinformationen von den Mitteln (5a-5e) an das mobilen Eingabe- und Auswertegerät (2) weiterzuleiten und
• die Steuersignale, die durch eine Auswertung der von den Mitteln (5a-5e) erhaltenen Zustandsinformationen im mobilen Eingabe- und Auswertegerät (2) generiert werden, an die elektronischen Komponenten (17a-17c) weiterzuleiten.

2. Haltevorrichtung (16) nach Anspruch 1, **dadurch gekennzeichnet, dass** der Controller (11) eingerichtet ist, die von den Mitteln (5a-5e) empfangenen Signale in vom Eingabe- und Auswertegerät (2) verwertbare Daten umzuwandeln,
wobei insbesondere vorgesehen ist, dass die empfangenen Signale der Mittel (5a-5e) von einem Drehzahlsensor, einen Geschwindigkeitssensor, einen Trittfrequenzsensor, einen Druckluftsensor, einen Sensor zur Erfassung einer Ladekapazität, einen Sensor zur Erfassung einer Ausgangsleistung, einen Höhensensor und/oder einen Temperatursensor stammen.

3. Haltevorrichtung (16) nach einem der vorhergehenden Ansprüche, **dadurch gekennzeichnet, dass** die Haltevorrichtung (16), insbesondere das Sende- und Empfangselement (4), Mittel (8) zur Satelliten gestützten Positionsbestimmung aufweist.

4. Haltevorrichtung (16) nach einem der vorhergehenden Ansprüche, **dadurch gekennzeichnet, dass** in der Haltevorrichtung (16) eine Diebstahlwarneinrichtung angeordnet ist, die insbesondere einen Beschleunigungssensor und/oder einen Positionstracking aufweist, wobei bei einer unbeabsichtigten Änderung der Position eine Nachricht an das Eingabe- und Auswertegerät (2) übersandt wird.

5. Haltevorrichtung (16) nach einem der vorhergehenden Ansprüche, **dadurch gekennzeichnet, dass** ein elektrischer Energiespeicher (9) in der Haltevorrichtung (16) angeordnet ist, insbesondere zur Energieversorgung des in der Haltevorrichtung gehaltenen mobilen Eingabe- und Auswertegeräts (2) oder des Sende- und Empfangselements (4).

6. Haltevorrichtung (16) nach Anspruch 5, **dadurch gekennzeichnet, dass** das Sende- und Empfangselement (4) einen Schalter (13) aufweist, der eingerichtet ist, die Energieversorgung zwischen dem Energiespeicher (9) und dem Controller (11) zu schalten.

7. Haltevorrichtung (16) nach einem der vorhergehenden Ansprüche, **dadurch gekennzeichnet, dass** das Sende- und Empfangselement (4) eine Kamera (10) aufweist.

8. Steuerungssystem (1) für ein Elektrofahrrad, das
• ein mobiles Eingabe- und Auswertegerät (2),
• eine Haltevorrichtung (16) nach einem der Ansprüche 1 bis 8, für das Eingabe- und Auswertegerät (2) sowie
• Mittel (5a-5e) zum Ansteuern elektronischer Komponenten (17a-17c) und zum Erfassen von Zustandsinformationen des Elektrofahrrads umfasst,
**dadurch gekennzeichnet, dass**
das Sende- und Empfangselement (4) in der Haltevorrichtung zum Weiterleiten von Signalen zu den Mitteln (5a-5e) mit dem das mobile Eingabe- und Auswertegerät (2) drahtlos verbindbar ist,
wobei die Haltevorrichtung (16) als Zentraleinheit mit einem eigenen Controller (11) dient, der eine Kommunikation zwischen dem mobilen Eingabe- und Ausgabegerät (2) und den Mitteln (5a-5e) steuert.

9. Steuerungssystem nach einem der Ansprüche 7 oder 8, **dadurch gekennzeichnet, dass** es Mittel zum Erfassen und insbesondere drahtlose Übertragen biometrischer Daten des Fahrers an das mobile Eingabe- und Auswertegerät (2) aufweist, das eine Funktion zur Darstellung und Auswertung der biometrischen Daten aufweist, wobei gegebenenfalls auf Grundlage der Auswertung automatisch Steuersignale vom mobilen Eingabe- und Auswertegerät (2) generierbar sind.

10. Steuerungssystem nach einem der Ansprüche 7 bis 9, **dadurch gekennzeichnet, dass** die elektronischen Komponenten (17a-17c)
• eine Komponente zur Motorsteuerung,
• eine elektronische Schaltungseinrichtung,
• einen Aktuator zur Beeinflussung einer Federrate,
• einen Aktuator zur Änderung einer Sattelhöhe,
• eine Lichtsteuerung,
• ein Sensor, und/oder
• eine Kamera
umfassen.

11. Steuerungssystem nach einem der Ansprüche 7 bis 10, **dadurch gekennzeichnet, dass** die Mittel (5a-5e) umfassen: einen Drehzahlsensor, einen Geschwindigkeitssensor, einen Trittfrequenzsensor, einen Druckluftsensor, einen Sensor zur Erfassung einer Ladekapazität, einen Sensor zur Erfassung einer Ausgangsleistung, einen Höhensensor und/oder einen Temperatursensor.

12. Steuerungssystem nach einem der Ansprüche 7 bis 11, **dadurch gekennzeichnet, dass** es ein Fernbedienungsmodul aufweist, das insbesondere drahtlos mit dem mobilen Eingabe- und Auswertegerät (2) verbindbar ist.

13. Verfahren zur Steuerung eines Controllers in einer Haltevorrichtung für ein mobiles Eingabe- und Auswertegerät (2) nach einem der Ansprüche 1 bis 12, wobei die Haltevorrichtung eingerichtet ist, an einem Lenker eines Elektrofahrrads montiert zu werden und ein Sende- und Empfangselement (4) aufweist, mit dem das mobile Eingabe- und Auswertegerät (2) insbesondere drahtlos verbindbar ist,
wobei das Sende- und Empfangselement (4)
• Kommunikationselemente (7a-7e) aufweist, über die eine insbesondere drahtlose Verbindung mit Mitteln (5a-5e)
• zum Erfassen von Zustandsinformationen des Fahrzeugs, und
• zum Ansteuern der elektronischen Komponenten (17a-17c) durch in dem Eingabe- und Auswertegerät (2) erzeugten Steuersignale herstellbar ist, und
• einen Controller (11) aufweist, der die Kommunikation zwischen dem mobilen Eingabe- und Auswertegerät (2) und den Mitteln (5a-5e) steuert,
wobei das Verfahren die Kommunikation zwischen dem mobilen Eingabe- und Auswertegerät (2) und den Mitteln (5a-5e) steuert derart steuert, dass das Verfahren
• die von den Mitteln (5a-5e) erfassten Zustandsinformationen in für das Eingabe- und Auswertegerät (2) verwertbare Daten umwandelt und
• die umgewandelten Daten an das mobilen Eingabe- und Auswertegerät (2) weiterleitet und
• die Steuersignale, die durch eine Auswertung der von den Mitteln (5a-5e) erhaltenen Zustandsinformationen im mobilen Eingabe- und Auswertegerät (2) generiert werden, an die elektronischen Komponenten (17a-17c) weiterleitet.

## Claims

1. Mounting apparatus (16) for a mobile input and evaluation device (2) for installation on handlebars of an electric bicycle, having a form-fit receptacle for the mobile input and evaluation device (2), wherein the input and evaluation device (2) is intended to control electronic components (17a-17c) connected to the electric bicycle, in particular to control the drive system of the electric bicycle,
wherein the mounting apparatus (16) has a transmitting and receiving element (4) arranged in it, to which the mobile input and evaluation device (2) is in particular wirelessly connectable,
wherein the transmitting and receiving element (4)
• has communication elements (7a-7e) by way of which a, in particular wireless, connection to means (5a-5e)
• for capturing state information from the electric bicycle and
• for actuating the electronic components (17a-17c) by means of control signals generated in the input and evaluation device (2)
can be made, and
• has a controller (11) designed to control the communication between the mobile input and evaluation device (2) and the means (5a-5e),
wherein the controller is designed
• to forward the captured state information from the means (5a-5e) to the mobile input and evaluation device (2) and
• to forward the control signals generated in the mobile input and evaluation device (2) by means of an evaluation of the state information obtained from the means (5a-5e) to the electronic components (17a-17c).

2. Mounting apparatus (16) according to Claim 1, **characterized in that** the controller (11) is designed to convert the signals received from the means (5a-5e) into data that can be used by the input and evaluation device (2),
wherein there is in particular provision for the received signals from the means (5a-5e) to come from a rotation speed sensor, a velocity sensor, a cadence sensor, a compressed air sensor, a sensor for detecting a charge capacity, a sensor for detecting an output power, an altitude sensor and/or a temperature sensor.

3. Mounting apparatus (16) according to either of the preceding claims, **characterized in that** the mounting apparatus (16), in particular the transmitting and receiving element (4), has means (8) for satelliteassisted position determination.

4. Mounting apparatus (16) according to one of the preceding claims, **characterized in that** the mounting apparatus (16) has a theft warning device arranged in it, which in particular has an acceleration sensor and/or a position tracking unit, wherein an unintentional change of position results in a message being sent to the input and evaluation device (2).

5. Mounting apparatus (16) according to one of the preceding claims, **characterized in that** an electrical energy store (9) is arranged in the mounting apparatus (16), in particular for supplying power to the mobile input and evaluation device (2) mounted in the mounting apparatus or to the transmitting and receiving element (4) .

6. Mounting apparatus (16) according to Claim 5, **characterized in that** the transmitting and receiving element (4) has a switch (13) designed to switch the supply of power between the energy store (9) and the controller (11).

7. Mounting apparatus (16) according to one of the preceding claims, **characterized in that** the transmitting and receiving element (4) has a camera (10) .

8. Control system (1) for an electric bicycle that comprises
• a mobile input and evaluation device (2),
• a mounting apparatus (16) according to one of Claims 1 to 8, for the input and evaluation device (2), and
• means (5a-5e) for actuating electronic components (17a-17c) and for capturing state information from the electric bicycle,
**characterized in that**
the transmitting and receiving element (4) in the mounting apparatus is wirelessly connectable to the mobile input and evaluation device (2) for the purpose of forwarding signals to the means (5a-5e),
wherein the mounting apparatus (16) serves as a central processing unit having an individual controller (11) that controls a communication between the mobile input and output device (2) and the means (5a-5e).

9. Control system according to either of Claims 7 and 8, **characterized in that** it has means for capturing and in particular wirelessly transmitting biometric data of the driver to the mobile input and evaluation device (2), which has a function for presenting and evaluating the biometric data, wherein control signals are automatically generable by the mobile input and evaluation device (2) on the basis of the evaluation if necessary.

10. Control system according to one of Claims 7 to 9, **characterized in that** the electronic components (17a-17c) comprise
• a component for motor control,
• an electronic circuit device,
• an actuator for influencing a spring rate,
• an actuator for changing a saddle height,
• a light controller,
• a sensor, and/or
• a camera.

11. Control system according to one of Claims 7 to 10, **characterized in that** the means (5a-5e) comprise: a rotation speed sensor, a velocity sensor, a cadence sensor, a compressed air sensor, a sensor for detecting a charge capacity, a sensor for detecting an output power, an altitude sensor and/or a temperature sensor.

12. Control system according to one of Claims 7 to 11, **characterized in that** it has a remote control module that is in particular wirelessly connectable to the mobile input and evaluation device (2).

13. Method for controlling a controller in a mounting apparatus for a mobile input and evaluation device (2) according to one of Claims 1 to 12, wherein the mounting apparatus is designed to be installed on handlebars of an electric bicycle and has a transmitting and receiving element (4) to which the mobile input and evaluation device (2) is in particular wirelessly connectable,
wherein the transmitting and receiving element (4)
• has communication elements (7a-7e) by way of which a, in particular wireless, connection to means (5a-5e)
• for capturing state information from the vehicle and
• for actuating the electronic components (17a-17c) by means of control signals generated in the input and evaluation device (2)
can be made, and
• has a controller (11) that controls the communication between the mobile input and evaluation device (2) and the means (5a-5e),
wherein the method controls the communication between the mobile input and evaluation device (2) and the means (5a-5e) such that the method
• converts the state information captured by the means (5a-5e) into data that can be used for the input and evaluation device (2) and
• forwards the converted data to the mobile input and evaluation device (2), and
• forwards the control signals generated in the mobile input and evaluation device (2) by means of an evaluation of the state information obtained from the means (5a-5e) to the electronic components (17a-17c).

## Revendications

1. Dispositif de fixation (16) pour un appareil mobile de saisie et d'évaluation (2) destiné à être monté sur le guidon d'un vélo électrique, comprenant un réceptacle à complémentarité de forme destiné à l'appareil mobile de saisie et d'évaluation (2), dans lequel l'appareil de saisie et d'évaluation (2) est prévu pour commander des composants électroniques (17a-17c) reliés au vélo électrique, en particulier pour commander le système d'entraînement du vélo électrique,
dans lequel un élément d'émission et de réception (4) est disposé dans le dispositif de fixation (16), auquel l'appareil mobile de saisie et d'évaluation (2) peut être relié, en particulier sans fil,
dans lequel l'élément d'émission et de réception (4)
• comporte des éléments de communication (7a-7e), par le biais desquels une liaison, en particulier une liaison sans fil, peut être établie avec des moyens (5a-5e)
• destinés à détecter des informations d'état du vélo électrique, et
• destinés à commander les composants électroniques (17a-17c) au moyen de signaux de commande générés dans l'appareil de saisie et d'évaluation (2), et
• comporte un contrôleur (11) qui est conçu pour commander la communication entre l'appareil mobile de saisie et d'évaluation (2) et les moyens (5a-5e),
dans lequel le contrôleur est conçu
• pour transmettre à l'appareil mobile de saisie et d'évaluation (2) des informations d'état détectées par les moyens (5a-5e), et
• pour transmettre aux composants électroniques (17a-17c) les signaux de commande qui sont générés par une évaluation des informations d'état obtenues par les moyens (5a-5e) dans l'appareil mobile de saisie et d'évaluation (2).

2. Dispositif de fixation (16) selon la revendication 1, **caractérisé en ce que** le contrôleur (11) est conçu pour convertir les signaux reçus en provenance des moyens (5a-5e) en données utilisables par l'appareil de saisie et d'évaluation (2),
dans lequel il est prévu en particulier que les signaux reçus en provenance des moyens (5a-5e) soient issus d'un capteur de vitesse de rotation, d'un capteur de vitesse, d'un capteur de cadence, d'un capteur d'air comprimé, d'un capteur destiné à détecter une capacité de charge, d'un capteur destiné à détecter une puissance de sortie, d'un capteur d'altitude et/ou d'un capteur de température.

3. Dispositif de fixation (16) selon l'une quelconque des revendications précédentes, **caractérisé en ce que** le dispositif de fixation (16), en particulier l'élément d'émission et de réception (4), comprend des moyens (8) de détermination de position par satellite.

4. Dispositif de fixation (16) selon l'une quelconque des revendications précédentes, **caractérisé en ce qu'**un dispositif d'avertissement de vol est disposé dans le dispositif de fixation (16), lequel comporte notamment un capteur d'accélération et/ou un système de suivi de position,
dans lequel, en cas de modification involontaire de la position, un message est transmis à l'appareil de saisie et d'évaluation (2).

5. Dispositif de fixation (16) selon l'une quelconque des revendications précédentes, **caractérisé en ce qu'**un accumulateur d'énergie électrique (9) est disposé dans le dispositif de fixation (16), en particulier pour l'alimentation en énergie de l'appareil mobile de saisie et d'évaluation (2) maintenu dans le dispositif de fixation ou de l'élément d'émission et de réception (4).

6. Dispositif de fixation (16) selon la revendication 5, **caractérisé en ce que** l'élément d'émission et de réception (4) comprend un commutateur (13) conçu pour commuter l'alimentation électrique entre l'accumulateur d'énergie (9) et le contrôleur (11).

7. Dispositif de fixation (16) selon l'une quelconque des revendications précédentes, **caractérisé en ce que** l'élément d'émission et de réception (4) comporte une caméra (10).

8. Système de commande (1) pour un vélo électrique, comprenant
• un appareil mobile de saisie et d'évaluation (2),
• un dispositif de fixation (16) selon l'une quelconque des revendications 1 à 8, destiné à l'appareil de saisie et d'évaluation (2), ainsi que
• des moyens (5a-5e) destinés à commander des composants électroniques (17a-17c) et à détecter des informations d'état du vélo électrique,
**caractérisé en ce que**
l'élément d'émission et de réception (4) présent dans le dispositif de fixation peut être relié sans fil à l'appareil mobile de saisie et d'évaluation (2) pour transmettre des signaux aux moyens (5a-5e),
dans lequel le dispositif de fixation (16) sert d'unité centrale possédant son propre contrôleur (11) qui commande une communication entre l'appareil mobile de saisie et de sortie (2) et les moyens (5a-5e).

9. Système de commande selon l'une quelconque des revendications 7 et 8, **caractérisé en ce qu'**il comporte des moyens destinés à détecter et notamment à transmettre sans fil des données biométriques du conducteur à l'appareil mobile d'entrée et d'évaluation (2), qui possède une fonction de représentation et d'évaluation des données biométriques, dans lequel des signaux de commande peuvent, le cas échéant, être générés automatiquement par l'appareil mobile de saisie et d'évaluation (2) sur la base de l'évaluation.

10. Système de commande selon l'une quelconque des revendications 7 à 9, **caractérisé en ce que** les composants électroniques (17a-17c) comprennent
• un composant de commande de moteur,
• un dispositif de circuit électronique,
• un actionneur destiné à influencer une raideur de ressort,
• un actionneur destiné à modifier la hauteur de la selle,
• un dispositif de commande de lumière,
• un capteur, et/ou
• une caméra.

11. Système de commande selon l'une quelconque des revendications 7 à 10, **caractérisé en ce que** les moyens (5a-5e) comprennent : un capteur de vitesse de rotation, un capteur de vitesse, un capteur de cadence, un capteur d'air comprimé, un capteur de capacité de charge, un capteur de puissance de sortie, un capteur d'altitude et/ou un capteur de température.

12. Système de commande selon l'une quelconque des revendications 7 à 11, **caractérisé en ce qu'**il comprend un module de commande à distance qui peut être relié, notamment sans fil, à l'appareil mobile de saisie et d'évaluation (2).

13. Procédé de commande d'un contrôleur présent dans un dispositif de fixation d'un appareil mobile de saisie et d'évaluation (2) selon l'une quelconque des revendications 1 à 12, dans lequel le dispositif de fixation est conçu pour être monté sur le guidon d'un vélo électrique et comporte un élément d'émission et de réception (4) auquel l'appareil mobile de saisie et d'évaluation (2) peut être relié, en particulier sans fil, dans lequel l'élément d'émission et de réception (4)
• comporte des éléments de communication (7a-7e), par le biais desquels une liaison, en particulier une liaison sans fil, peut être établie avec des moyens (5a-5e)
• destiné à détecter des informations d'état du véhicule, et
• destinés à commander les composants électroniques (17a-17c) au moyen de signaux de commande générés dans l'appareil de saisie et d'évaluation (2), et
• comporte un contrôleur (11) qui commande la communication entre l'appareil mobile de saisie et d'évaluation (2) et les moyens (5a-5e),
dans lequel le procédé commande la communication entre l'appareil mobile de saisie et d'évaluation (2) et les moyens (5a-5e) de telle manière que le procédé
• convertit les informations d'état détectées par les moyens (5a-5e) en données utilisables par l'appareil de saisie et d'évaluation (2), et
• transmet les données converties à l'appareil mobile de saisie et d'évaluation (2), et
• transmet aux composants électroniques (17a-17c) les signaux de commande qui sont générés par une évaluation des informations d'état obtenues par les moyens (5a-5e) dans l'appareil mobile de saisie et d'évaluation (2).
